# EUROPEAN PATENT APPLICATION

(11) **EP 2 439 404 A1**
(43) Date of publication of application: **11.04.2012**
(21) Application number: 10782892.3
(22) Date of filing: 27.05.2010
(51) Int. Cl.: F03D 3/04, F03D 3/02

(54) **SQUARE ACTIVE-BODY COMPRESSED WIND GENERATING APPARATUS**

(30) Priority: 01.06.2009 CN 200910111878; 22.07.2009 CN 200920139537 U
(71) Applicant: Lei, Yuening, Muyun Xiang, Fuan Fujian 355002 (CN); Lei, Shengqing, Muyun Xiang, Fuan Fujian 355002 (CN)
(72) Inventor: Lei, Yuening, Muyun Xiang, Fuan Fujian 355002 (CN); Lei, Shengqing, Muyun Xiang, Fuan Fujian 355002 (CN)
(74) Representative: Crippa, Paolo Ernesto
(86) International application number: PCT/CN2010/000759
(87) International publication number: WO 2010/139188

(57) **Abstract**

The present invention relates to a compressed-air wind turbine generator system having a substantially square, movable body, said system including: a wind turbine (B) positioned in a central portion of the system, the wind turbine having a central shaft (27) connected to input shafts of generator sets (7, 10) in order to drive the input shafts to rotate around a rotational central axis (z); a plurality of compressors (A1, A2, A3, A4, A5) for providing compressed air to the wind turbine (B), the plurality of compressors being alignedly stacked at a front side of the system in the direction of the rotational central axis (z), the plurality of compressors extending from their outer ends to their inner ends towards the central portion of the system taperedly along a curve, the outer ends of the compressors jointly containing an air inlet surface with a first width (w₁), and the inner ends of the compressors jointly containing an air outlet surface which encloses a cylindrical space for concentrically accommodating the wind turbine (B); a left sail (8a) and a right sail (8b) erecting at the left side and the right side of the system, respectively, symmetrically with respect to the center of the system, the left and right sails being arranged closer to the rear side of the system and extending from the front side to the rear side in such a manner that the distance between the left sail (8a) and the right sail (8b) gradually increases; and a rear sail (72) erecting at the rear side of the system, the rear sail being arranged closer to the left sail (8a) or the right sail (8b), depending the back profile of the compressors; wherein the plurality of compressors, the left and right sails and the rear sail are assembled into a unit in such a way that they can rotate together in the range of 360 degrees with respect to the wind turbine under the action of the sails to keep the air inlet surface of the compressors facing the largest wind. Therefore, the system has a lower cost, a high utilization efficiency of wind power, large installed capacity and a longer safe life.

## Description

### Technical Field

The present invention relates to a wind-powered generator system, and in particular to a compressed-air wind turbine generator system having a substantially square, movable body.

### Background Art

At present time, the social productive forces is developing very fast, and the electrical power is used widely, and household energy consumption progressively rises, which causes the limited resource to be badly consumed so that the limited resource faces the risk of drying up. According to the search data of energy resource information, more than 85% of the electrical energy is generated from fire, nucleus, oil and gas, causing a harsh environment pollution and changing the climate. In turn, it may possibly directly threaten zoology and the living of people.

The traditional wind-powered generator systems are often known as three-blade, fan-typed generator systems. Such generator systems have blades similar to the blades of an electric fan which are mounted on the top of a column. Due to the arc shape of the blades, the blades can rotate under the action of wind, and the generator in turn converts the rotation of the blades into electricity. Such a system has a relative simple structure, but contains some shortcomings. That is, the utilization of wind power is very low, since the wind power is received by means of the blades, the area of the blades are limited and most of the space among the blades can't utilize the wind. So, several hundreds of such wind-powered generator systems generally can't provide electricity enough to satisfy the productive electrical load of a common factory. In order to satisfy the productive requirements, a large land will be occupied which causes the land and wind resources to be heavily wasted.

### Content of the Invention

The object of the present invention is directed to overcome the above shortcomings, and to provide a compressed-air wind turbine generator system having a substantially square, movable body, which system has a lower cost, high utilization efficiency of wind power, large installed capacity and a longer safe life.

In order to realize the above object, the compressed-air wind turbine generator system having a substantially square, movable body of the present invention includes:
a wind turbine B positioned in a central portion of the system, the wind turbine having a central shaft 27 connected to input shafts of generator sets 7, 10 in order to drive the input shafts to rotate around a rotational central axis z;
a plurality of compressors A1, A2, A3, A4, A5 for providing compressed air to the wind turbine (B), the plurality of compressors being alignedly stacked at a front side of the system in the direction of the rotational central axis z, the plurality of compressors extending from their outer ends to their inner ends towards the central portion of the system taperedly along a curve, the outer ends of the compressors jointly containing an air inlet surface with a first width w₁, and the inner ends of the compressors jointly containing an air outlet surface which encloses a cylindrical space for concentrically accommodating the wind turbine B;
a left sail 8a and a right sail 8b erecting at the left side and the right side of the system, respectively, symmetrically with respect to the center of the system, the left and right sails being arranged closer to the rear side of the system and extending from the front side to the rear side in such a manner that the distance between the left sail 8a and the right sail 8b gradually increases; and
a rear sail 72 erecting at the rear side of the system, the rear sail being arranged closer to the left sail 8a or the right sail 8b, depending the back profile of the compressors;
wherein the plurality of compressors, the left and right sails and the rear sail are assembled into a unit in such a way that they can rotate together in the range of 360 degrees with respect to the wind turbine under the action of the sails to keep the air inlet surface of the compressors facing the largest wind.

The main body of the present system has a shape of triangle. In order to make the air inlet surface just face the direction of incoming air, vertical sails are arranged at the two side edges of the system, and an additional sail is laterally arranged at the rear side edge of the system, thus forming a square-shaped system by means of the sails and the additional sail together with various transverse beams and straight rods. Such a design makes the incoming air flows into the air channels just in the direction of incoming air so that the wind turbine is efficiently driven to rotate. Specifically, the wind enters the compressors from the air inlet surface of the compressors, and then impacts the wind turbines from the air outlet surface after converged and compressed to drive the wind turbines to rotate to generate electricity. The ability of rotating in the range of 360 degrees under the action of the sails can always ensure the air inlet surface to just face the direction of incoming air, so that the various inlets of the system just align with the direction the incoming air to receive all the incoming air, which can improve the utilization efficiency of wind. Therefore, in the same conditions of wind, the utilization efficiency of wind of the present system is eight times greater than that of the traditional fan-typed systems, and the power of one system of the present invention is 300 times greater than that of the traditional fan-typed system. Moreover, the system of the present invention has a lower cost and remarkably reduces noise.

Preferably, the overall height of the compressors is substantially identical to the height of the various sails and the wind turbine B; and the sails and the plurality of compressors are secured on a square frame 11 and beams 14, 53 of a circular ring derrick, and the square frame 11 and the beams 14, 53 of the circular ring derrick are mounted on a circular ring rail 3 and a smooth ground beam 43 by means of pulleys 2, 47.

In one embodiment of the compressor according to the present invention, five compressors are provided, and each of the compressors includes seven air channel units C1, C2, C3, C4, C5, C6, C7 spaced apart from one another, the seven air channels units taperedly extending towards the central portion of the system from their outer ends to their inner ends, forming a substantially fan shape, and the air inlet surface containing a convex cylindrical surface 50 located at the middle portion of the air inlet surface and planar surfaces 48 located at the two side portions of the air inlet surface. The across section of each of the air channel units C1, C2, C3, C4, C5, C6, C7 is substantially quadrangular, and the height of each of the air channel units along the rotational central axis z smoothly decreases from the outer end of this air channel unit to a position of two thirds of the total depth of the air channel unit and then smoothly increases from said position to the inner end of the air channel unit, so that a narrowing portion 23 is created at said position, whereby a respective compressor spacing 18 is formed between every two adjacent compressors of the plurality of compressors A1, A2, A3, A4, A5.

According to the above solution, the respective compressors taper towards the central portion of the system and accordingly form spacing between them. Therefore curved, continuous air channel units are created in such a manner that the converged wind advances under the continuous squeeze and that the compressor spacing increases the pressure for moderately expanding the wind to increase outlet wind speed, whereby the impact speed of wind is greatly improved and facilitates the utilization efficiency of wind power. Moreover, seven air channel units with different curves constitute a fan-shaped compressor which forms a substantially trigonal body in conjunction with the wind turbine.

Further, the seven air channel units C1, C2, C3, C4, C5, C6, C7 are formed by means of an upper panel 21, a lower panel D3, two side panels 16a, 16b and six vertical partitions 52, and each of the air channel units includes a shorter inlet section, a shorter outlet section and a longer middle section, the inlet section containing multi-stage compressing channels D, E, F, G, and the outlet section containing at least one additional lateral partition 56 and at least one additional vertical partition (55) for dividing the outlet, both the vertical partition 52 and the additional vertical partition 55 having an angle in the range from 52° to 62° with respect to the diameter line 85 of the wind turbine across the center of the air inlet surface at the inner end of the compressor. The function of the multi-stage compressing channels of the inlet section is to prevent the wind after entering the channels from escaping outwards.

Preferably, five stage compressing channels are provided, and the first stage compressing channel C is subdivided into thirty second stage compressing channels D. Each of the second stage compressing channels D is subdivided into four third stage compressing channels E, each of the third stage compressing channels E is subdivided into four fourth stage compressing channels F, and each of the fourth stage compressing channels F is subdivided into four fifth stage compressing channels G. The inlet and the inner outlet of any stage compressing channel have four edges equipped with compressing sills 68, 63, 65, 66, E1, E2, F1, F2, D1, D2, E5, E6, F5, F6 connected to one another to form a frame. The compressing sills of the inlet 67 and the inner outlet D5 of the first stage compressing channel extend to connect to the upper panel 21, the lower panel D3 and two side panels 16a, 16b, respectively. Each compressing sill of the inlet 67 includes a H steel bar D7 and a curved plate rolling D6 enclosing the H steel bar D7. The compressing sills of the inner outlet D5 consist of round pipes.

It can be seen according to a test result, that the compressing sills bring at least the following advantages. Firstly, it makes the construction of the system more easily and strengthens the system, by means of the compressing sill arrangement. Secondly, the compressing sill arrangement with double port limitations has no effect on the wind entering the inlets 67, and once the wind enters the air channels, it will not escape and expand within the air channels, due to the broad interior of the air channel units, so that the wind power at the outlets will be determined by the wind pressure at all the inlets of the system.

Moreover, the multi-stage compressing channels greatly facilitate the construction of large systems. A most advantageous point is that even very large system can be constructed only by dividing the compressing channels into more stages and by continuing shortening the air channels, which will greatly save cost of the system, improve the efficiency of inspiration, and save the cost of construction more easily.

Alternatively, the multi-stage compressing channels can include compressing channels with the stages from 2 to 11.

Preferably, both of side vertical partitions 52 of the fifth air channel unit C5 gradually close up to the center of the fifth air channel unit along the direction of the curve from the outer end to the inner end of the fifth air channel unit. The right side panel 16b and the vertical partitions of the first, second, third and fourth air channel units C1, C2, C3, C4 are bent towards the fifth air channel unit C5 from their respective outer ends to their respective inner ends. The left panel 16a and the vertical partitions of the sixth and seventh air channel units C6, C7 are bent towards the fifth air channel unit C5 from their respective outer ends to their respective positions at their respective depths of three fourths, and are then bent from the positions at their respective depths of three fourths to their respective inner ends and deflected from the fifth air channel unit C5. Such a design will help reducing the wind resistance.

Preferably, the air channel units B9 spaced apart within each compressor A have a number from at least 5 to 30 to generate electricity.

In one embodiment of the wind turbine B according to the present invention, the wind turbine B is cylindrical with an outer cylindrical surface 87 and an inner cylindrical surface 89, wherein the wind turbine B includes a top circular ring panel 25, a bottom circular ring panel 77 and a plurality of wind turbine units B1, B2, B3, B4, B5 located between the top circular ring panel 25 and the bottom circular ring panel 77, and wherein the central shaft 27 is connected to the circular ring panels of each of the wind turbine units B9 by connecting beams 29 extending radially outwards, respectively. Said circular ring panels including the top circular ring panel 25 and the bottom circular ring panel 77, and the wind turbine B may also selectively include at least one radial exhaust space 20, 82, each of which radial exhaust space 20, 82 is positioned between the adjacent wind turbine units. The radial exhaust spaces 20, 82 radically incline an angle from 5° to 10° upwards from the outside to the inside, and the wind turbine B9 radically inclines an angle from 5° to 10° downwards from the outside to the inside. The area of the air outlet surface of every compressor A is from 48% to 65% of the area of the outer cylindrical surface 87 of the respective wind turbine B 9.

Each of the wind turbine units is provided with a plurality of blades uniformly spaced apart from one another around circumference thereof, wherein each blade extends along the rotational central axis z and wherein the blades are fixed together by means of the upper circular ring panel 98 and the lower circular ring panel 99 located between the outer cylindrical surface 87 and the inner cylindrical surface 89, and wherein the central shaft 27 is connected to the upper circular ring panel 98 and the lower circular ring panel 99 by means of the connecting beams 29 extending radially outwards, respectively.

Preferably, the outer cylindrical surface 87 has an outer diameter being about 32% of the first width W₁, and the inner cylindrical surface 89 has an inner diameter being at least 60% of the outer diameter, and the radial width W₂ of circular ring panel of the upper and lower circular ring panels 98, 99 is at least 20% of the outer diameter.

Preferably, each blade is divided into an outer blade 80, a middle blade 93 and an inner blade 92. The outer blade 80, the middle blade 93 and the inner blade 92 are connected to one another by means of connecting posts 90, 91, respectively, to form two folds and three bends, and extend from the outer cylindrical surface 87 to the inner cylindrical surface 89 at different angles, respectively, and the inner blade 92 extends inwards past the inner cylindrical surface 89. The inner blade 92 extends outwards to form an angle of at least 50° with respect to the diameter line 85 of the wind turbine across the center of the air inlet surface. The middle blade 93 extends outwards to form an angle of at least 42° with respect to the diameter line 85 of the wind turbine across the center of the air inlet surface. The outer blade 80 extends inwards to form an angle of at least 29° with respect to the diameter line 85 of the wind turbine across the center of the air inlet surface.

Wherein, the outer blade 80 has a radial width being at least 27% of the radial width W₂ of circular ring panel, and the middle blade 93 has a radial width being at least 30% of the radial width W₂ of circular ring panel, and the inner blade 92 has a radial width being at least 20% of the radial width W₂ of circular ring panel, and the portion 86 of the inner blade 92 past the inner cylindrical surface 89 has a radial width being at least more than 0.5% of the radial width W₂ of circular ring panel. In addition, the bending depth of the inner blade 92 is at least 18% of the radial width thereof, and the bending depth of the middle blade 93 is at least 21 % of the radial width thereof, and the bending depth of the outer blade 80 is at least 8% of the radial width thereof, and the additional outer blade 95 has the same bending depth as the outer blade 80.

Optionally, the portion 86 of the inner blade 92 past the inner cylindrical surface 89 has a radial width being at least 1% of the outer diameter.

Preferably, each inner blade 92 is also equipped with an angle iron post 94 adjacent to the inner cylindrical surface 89, the angle iron post 94 being arranged along the back surface of the inner blade 92 so that an exhaust 88 formed between the adjacent inner blades 92 has a width at least 50% of which is occupied by the angle iron post 94.

Preferably, each pair of adjacent blades 80 is provided with an additional outer blade 95 therebetween, wherein a lateral curved wedge plate B6 is provided in a spaced inlet (79) located between the adjacent outer blade 80 and additional outer blade 95 to connect the adjacent outer blade 80 and additional outer blade 95, and wherein the additional outer blade 95 is assembled between the upper and lower circular ring panels 98, 99 and on the connecting posts 91.

Further, a plurality of exhaust blades 81 are provided within the radial exhaust spaces 20, 82 uniformly positioned around the circumference. The exhaust blade 81 has a width being at least 35% of the radial width W₂ of circular ring panel, and extends inwards to form an angle of at least 48° with respect to the diameter line 85 of the wind turbine across the center of the air inlet surface.

Optionally, an additional circular ring panel 78 may also be provided between the upper and lower circular ring panels of each wind turbine unit, which additional circular ring panel 78 keeps substantially flat and straight.

Preferably, the number of the blades of one wind turbine unit is from 128 to 1800.

Preferably, the wind turbine units B9 have the same number as the compressors A, and both the wind turbine units and the compressors include at least 8 wind turbine units and at least 8 compressors to generate electricity, respectively.

In an embodiment of the sails according to the present invention, a distance 1 between the outermost ends of the left and right sails at the rear side of the system is at least 101% of the first width (w₁).

Further, each sail includes a plurality of curved and rolled blades arranged in one row and connected with one another, and the plurality of curved and rolled blades of the left and right sails have a combined width being at least 40% of the first width (w₁). Wherein, the plurality of curved and rolled blades of the left and right sails enlarge stepwise from the front side to the rear side of the system, and wherein the plurality of curved and rolled blades of the rear sail are identical to one another.

Generally, the compressed-air wind turbine generator system according to the present invention has a lower cost, easier construction and more large power for a single generator (up to more than 500,000kw for a single large generator), higher utilization efficiency of wind power (60% efficiency for 1kw, 75% for 1MW, 85% for 10MW, 90% for 100MW, for a single generator), downwind, little wind resistance, low noise, and longer safe life, as compared with all other generator systems.

### Brief Description of the Drawings

More features and advantages will become apparent from the following detailed description in connection with the reference of the following drawings, wherein:
Fig. 1 is a perspective view of one embodiment of a compressed-air wind turbine generator system having a substantially square, movable body according to the present invention;
Fig. 2 is a plan view of the chassis base of the wind turbine generator system of Fig.1;
Fig. 3 is a plan view of the bottom frame of the wind turbine generator system of Fig.1;
Fig.4 is an oblique view of the compressors of the wind turbine generator system of Fig.1;
Fig. 5 is a perspective view of the stacked combined device of compressors of Fig.4;
Fig.6 is a vertical view of the combined inlet of the device of Fig.5;
Fig. 7 is a perspective view of divided compressing channels D of the compressor unit at the inlet as shown in Fig. 6;
Fig. 8 is an oblique view of divided compressing channels E, of the compressing channel D as shown in Fig.7;
Fig. 9 is a top plan view of the wind turbine generator system of Fig.1;
Fig.10 is a perspective view of the cylindrical wind turbine of Fig.1;
Fig.11 is a plan view of the blade arrangement of the cylindrical wind turbine of Fig. 10; and
Fig.12 is a sectional view of a unit of the cylindrical wind turbine of Fig.10.

### Preferred Embodiments

The detailed structure of the present invention is further described in conjunction with the drawings, however, the present invention is not limited to the described embodiments herein.

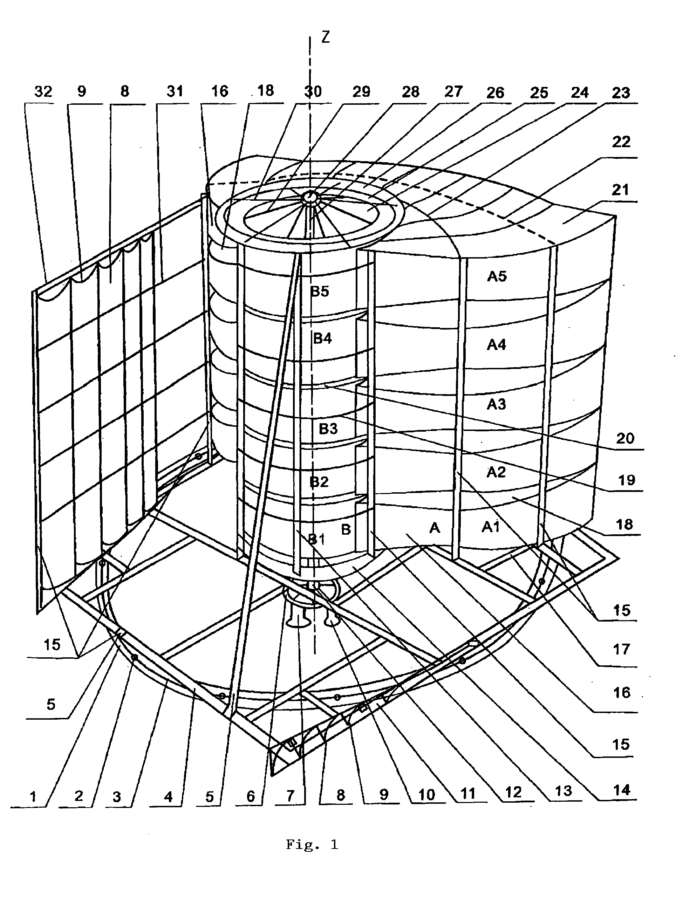

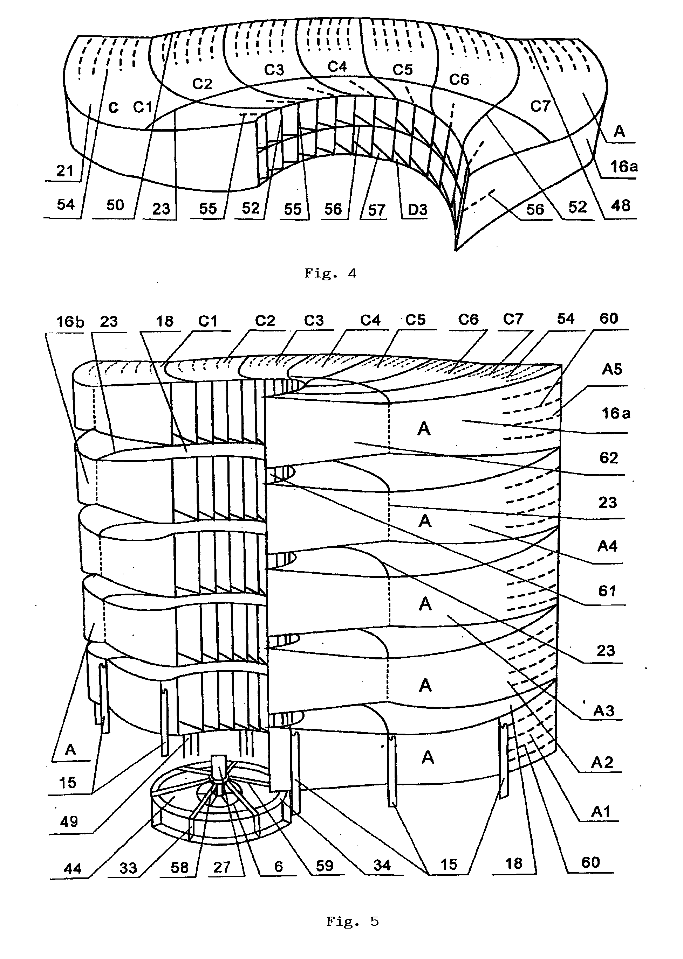

Fig. 1 is a perspective view of one embodiment of a compressed-air wind turbine generator system having a substantially square, movable body according to the present invention. In Fig.1, the reference sign A denotes the after-mentioned compressors, and the reference sign B denotes the after-mentioned cylindrical. In Figs.4, 7 and 8, the reference signs C, D, E, F, G denote the five-stage compressing channels (wherein the Fifth compressing channels G are not shown) of the after-mentioned compressors, respectively. The reference numeral 15 denotes the after-mentioned derrick posts. The dash lines represent an interior. In addition, various specifications of the system configuration are determined based on the combined width of the air inlet surfaces 48, 80 (i.e., the first width W₁), and the system diameter line 85 is defined to travel across the central line z and across the center of the air inlet surface. In the following description, "front side", "left and right sides", "rear side", "left and right directions", "inner and outer edges", and "up and down direction" are all referred with respect to the compressed-air wind turbine generator system of the present invention in an assembled state. The following "radial width" refers to the width measured along the direction of the diameter of the wind turbine.

In a preferable embodiment as shown in Figs. 1, 4 and 5, the whole system includes compressors, a square frame consisting of transverse and straight derrick beams, circular ring derrick beams, various derrick posts, beams, rod bones, sails and compressing lines, sills, and various bases, which are all connected to a bottom frame and then mounted on a circular ring rail and a chassis base by means of pulleys; and a cylindrical wind turbine, wherein the wind turbine includes wind turbine units positioned within the space for moving and assigned to the inner edges of the respective compressors, and wherein the lower end of the central shaft of the wind turbine is connected to the upper end of a connector of a chain wheel and the lower end of the connector is engaged with an inner gear. The inner gear also engages with a column gear and an input shaft of the generator sets. Wind enters the inlet through the air inlet surface of the compressors, and is converged and compressed through the compressing lines and the air channel units, and then impacts the space for moving outside of the outlets, and in turn drives the wind turbine to rotate to generate electricity.

Specifically, five compressors A1, A2, A3, A4, A5 are stacked at the front side of the system and assigned with one another along the rotational central axis z. The five compressors taperedly extend along a curve towards the central portion of the system from their outer ends to their inner ends, respectively, jointly forming an air inlet surface with a first width W₁ at the outer ends of the compressors. An air outlet surface 61 is jointly formed at the inner ends of the compressors, and encloses a concentrically cylindrical space for accommodating the wind turbine B. The air outlet surface 61 has an area being 48%∼58% of the area of the periphery surface of the wind turbine. Spacing 18 is formed between the adjacent ones of the five compressors. The cylindrical wind turbine B is positioned within the concentrically cylindrical space. The left and right sails 8a, 8b are arranged at both left and right side edges of the system, and the rear sail 72 is arranged behind the central portion of the system. The compressors and the sails constitute an integral device. Under the action of the left and right and rear sails 8a, 8b, 72, the integral device can rotate at an angle in the range of 360° so that the air inlet surface 48, 50 naturally rotates in the range of 360° to face the incoming air to receive wind power from various directions.

The compressed-air wind turbine generator system according to the present invention firstly has a chassis base containing outer and inner circular ring ground beams 1, 43. The chassis base includes various straight ground beams 45, 46 extending inwards from a peripheral guardrail web 35 and mounting bases of the generator sets 7, 10. A circular ring rail 3 is positioned in the plane of the outer circular ring ground beam land engages the pulley 2 to perform a relative movement. Each of pulleys 2, 47 are mounted at the bottom of the outer and inner circular ring derrick beams 53, 14. The outer and inner circular ring derrick beams 53, 14 are integral with a frame 11 combined of transverse and straight derrick beams 4, 17. Vertical derrick posts 15, semi-circle transverse beams of the housing of the wind turbine B, erecting posts 13, oblique support derrick posts 5, a top mounting frame 30 and a circular ring frame 26 are provided, respectively. The vertical sails 8a, 8b, 72 are connected to the upper straight and transverse beams 32, 70 and the support rod bones 31. The compressing lines (dashed line 22) within the body of the compressors A and the round-tube posts49, 75, 76 are welded into a unitary body.

There are several derrick beams 59 provided at the bottom of the cylindrical wind turbine B. The derrick beams 59 are combined with the circular ring derrick beams 14 and pulleys 47, and aligned within the inner circular ring ground beam 43. The derrick beams 59 extend inward to a bearing 58 positioned in the central mounting plane, and are fixed with the central shaft 27 of the wind turbine B. The central shaft 27 is connected to the coupler 12 of the chain wheel. The coupler 12 is connected to the inner gear 6, and in turn connected to large generator sets 7 and small generator sets 10. The top mounting frame 30 of the wind turbine B is connected to the circular ring frame 26 for securing a top bearing 28 of the wind turbine B and for supporting a beam bone 29 and the central shaft 27 of the wind turbine B. The top mounting frame 30 is aligned with a top circular plate 25 of the wind turbine B and the whole wind turbine B. A space 24 is provided within the top mounting frame 30 for axial air exhaust.

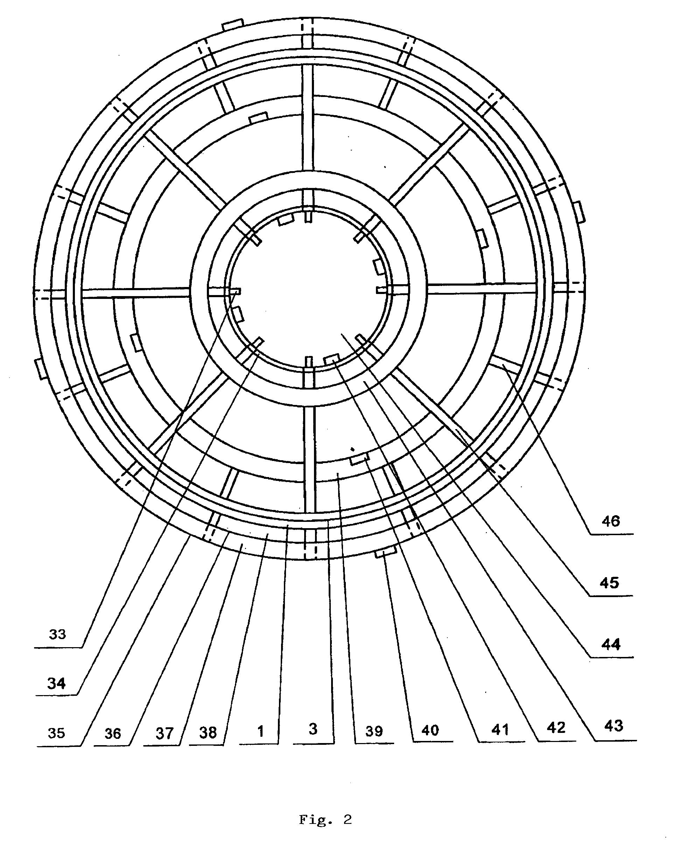

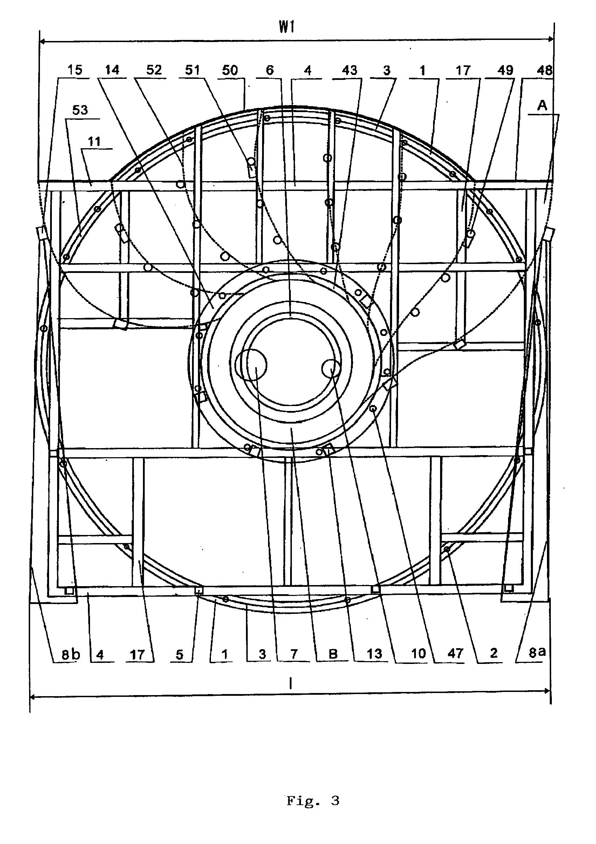

In the following, the chassis base and the bottom frame of the system are described in detail with reference to Fig.2 and Fig.3.

The system chassis base is provided with the inner and outer circular ring ground beams 43, 1. There are a working chamber 44 of the central generator sets, an annulus wall 34 and square posts 33, wherein the posts 33 are coupled with various straight beams 45 extending outwards. The inner smooth circular ring ground beam 43 and the outer circular ring ground beam 1 are coupled with each of the straight beams 45 and additional straight ground beams 46. Four tunnels are also provided under the ground beams of the system chassis, and are communicated with the working chamber 44 through an outer doorway 40 and an inner doorway 42, and communicated with a circular ring working passage 39 through an intermediate doorway 41, and in turn communicated with each of gates 51of electrical lifts within the system through the circular ring working passage 39. As shown in Fig.2, the guardrail web 35, viewing channels 37, inner handrails 36, a isolated space 38 and an engagement device for the circular ring sliding rail 3 and bottom pulleys 2 are arranged in a plane around the outer edge of the chassis. As shown in Fig.3, the system bottom frame 11 is provided with various transverse and straight derrick beams4, 17 which are connected to the inner and outer circular ring derrick beams 14, 53. The bottom frame 11 includes foundations for the derrick posts 15, 13, 5, foundations for the vertical sails 8a, 8b and additional sail 72, foundations for the round-tube posts 49, foundations for the partitions 52 of each unit C1∼C7 of the compressor A, foundations for various straight sills 65, 64, D1, E2, E5, F2, F5 in the vertical surface 50, 48 for receiving wind, and foundations for the pulley 2 with a groove and the smooth pulley 47, and so on. All the foundations are welded into a unitary body. The transverse and straight derrick beams 4, 17 can be added within the position of the compressor A, and have the specifications depending on the system volume. The planes of the inner and outer circular ring ground beams 1, 43 keep precise balance. The number of the pulleys 2, 47 arranged at the position of the compressor A is at least three times greater than those arranged at the outside. The inner and outer derrick posts 13, 15, the circular ring derrick beams 14, 53, oblique support derrick posts 5, and the transverse and straight derrick beams 4, 17, and so on, are all made from round tubes and welded.

The structure of the compressor A will be described below in detail with reference to Fig. 4 and Figs. 5 to 9.

The compressor A is formed as a fan-shaped compressor A body assembled by ten plates, and the ten plates of the compressor A are respectively one lower panel D3 and one upper panel 21, two side panels 16a, 16b and six vertical partitions 52 that separate the air channel into the air channel units C1, C2, C3, C4, C5, C6, C7. The vertical partitions 52 taper inwardly and smoothly (the upper and lower edges of the vertical partitions 52 taper inwardly and smoothly as well) from the widest point of the outer edge (inlet 67) to a narrowest point (namely, a compressing line 23) which is located at a position with a distance of two thirds of the total length of the partitions 52, and then enlarge smoothly from the compressing line 23 to an air outlet 57, wherein the width of the narrowest portion is about 67% of the maximum width of the vertical partitions, and the width at the air outlet 57 is about 93% of the maximum width of the vertical partitions.

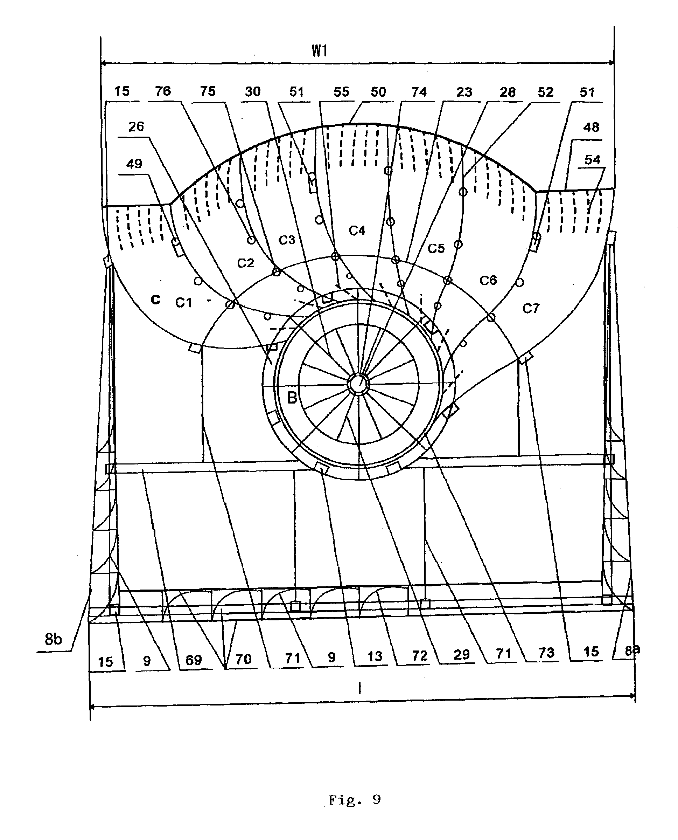

As shown in Figs. 4, 5, 6 and 9, the compressor A is formed of seven air channel units C1, C2, C3, C4, C5, C6, C7 tapered along different curves of the respective compressors A1, A2, A3, A4, A5, and the compressors A1, A2, A3, A4 and A5 are stacked to form a compressor assembly. As shown in Fig. 9, the air channel units C1, C2, C3, C4, C5, C6, C7 vary in curve and depth, the inlets 67 of the air channel units C1, C2, C3, C4, C5, C6, C7 are the same in height, the height of the outlet 57 is 93% of the height of the inlet 67, and the rest 7% is a radial air exhausting spacing 18.

The respective air channel unit C1, C2, C3, C4, C5, C6, C7 is a hollow quadrangular prism, the unit tapers inwardly from the inlet 67 of the vertical air inlet surfaces 48, 50 at the outer edge to the outlet 57. Compared with the inlet 67, the outlet 57 is reduced by 61%. Secondly, as shown in Fig. 9, the partitions 52 at both sides of the air channel unit C5 substantially and symmetrically close up to the center of the air channel unit from the inlet 67 to the outlet 57, and the other air channel units C, such as C6 and C4, as well as C7 and C3, C2, C1, are all curved towards the air channel unit C5, for instance, the partitions 52 of the units C6, C7 and the external side panel 16a are curved from the compressor portion 23 inwardly and then outwardly to an inner edge 61 of the system. As shown in Fig. 4, the outlet 57 of the respective air channel unit C1, C2, C3, C4, C5, C6, C7 is provided with an additional vertical partition 55 and an additional horizontal partition 56, the length of the additional vertical partition 55 and the additional horizontal partition 56 extending from the outlet 57 into the air channel is about 5% of the total combined width of the air inlet surfaces 48, 50, and the height of the additional vertical partition 55 is the same as that of the outlet 57. Each additional vertical partition 55 forms an eccentric angle of 56° with respect to the diameter line 85 adjacent the outlet 57, and the side panels 16a, 16b form an eccentric angle identical with that of the vertical partitions with respect to the diameter line 85 adjacent the outlet 57.

As shown in Figs. 5, 6, 7 and 9, the air inlet surfaces 48, 50 constitute a wind source receiving inlet 67, the inner edge 61 of which encloses a substantially semi-circle moving space for mounting the cylindrical wind turbine B. It can be seen from the vertical partitions 54 and the main horizontal partitions 60 as indicated by dashed lines in Fig. 5 that the wind source receiving inlet 67 is provided with a wind source compressing channel D facing inwardly, the inward depth of which is about 5% to 7% of the total combined width of the air inlet surfaces 48, 50 of the compressor A. Each compressed channel D tapers inwardly from the inlet 67 to the inner outlet D5, with 7% volume reduced. The inlet 67 section of the respective air channel unit C1, C2, C3, C4, C5, C6, C7 is provided with the wind source compressing channel D, while the outlets 57 are each provided with the additional vertical partitions 55 and the additional horizontal partitions 56. Except the round-tube posts 49, 75, 76 and ways 51 of electrical lifts inside the air channel unit C, the other inner sections are all hollow quadrangular prisms.

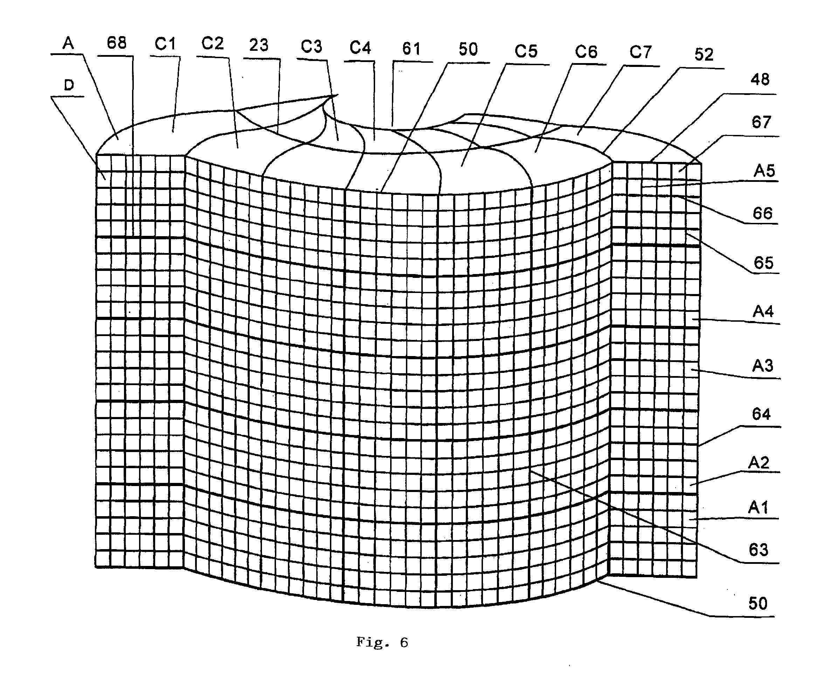

As shown in Figs. 3, 6 and 9, five external edges of the air channel unit C2, C3, C4, C5, C6 forming the air inlet surface 50 are arranged in the range of 0.9/4 of the perimeter of the external circular ring ground beam as shown in Fig. 3, and the external edges of the air channel units C2 to C6 extend beyond the circular ring ground beam 1, the length beyond the circular ring ground beam 1 is about 0.1% to 0.5% of the perimeter of the circular ring ground beam 1. The external edges of the air channel units C1 and C7 are parallel to the beam 4. Similarly, the length of the air channel units C1 and C7 beyond the beam 4 is about 0.1% to 0.5% of the length of the beam 4. As shown in Fig. 6, the respective compressors A1, A2, A3, A4, A5 are closely stacked 68 to form a huge grille for receiving the wind source at the air inlet surfaces 48, 50, and then under the effect of the vertical sails 8, 72, the air inlet surfaces 48, 50 of the system receive wind all around.

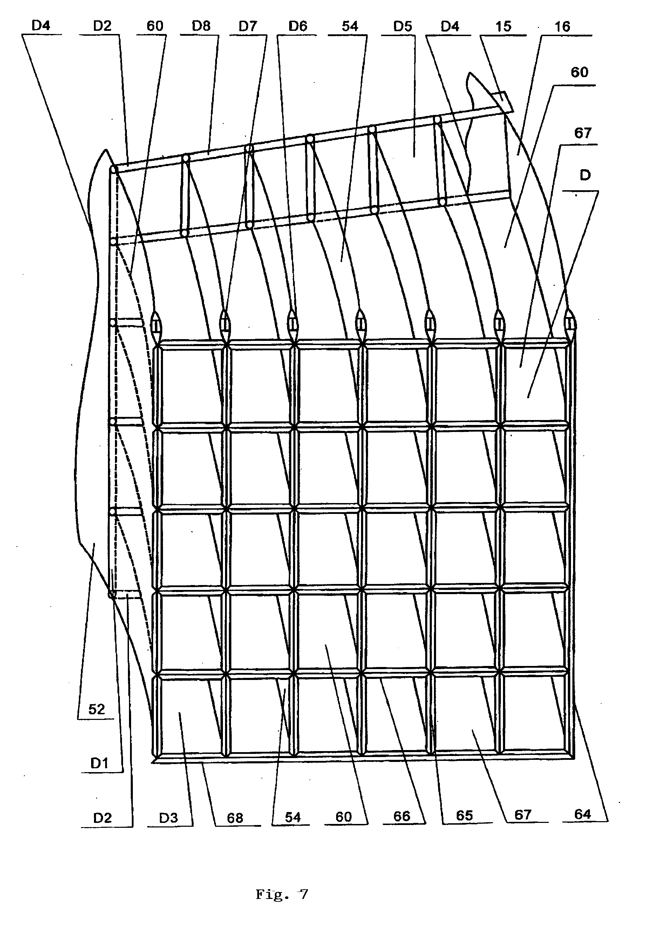

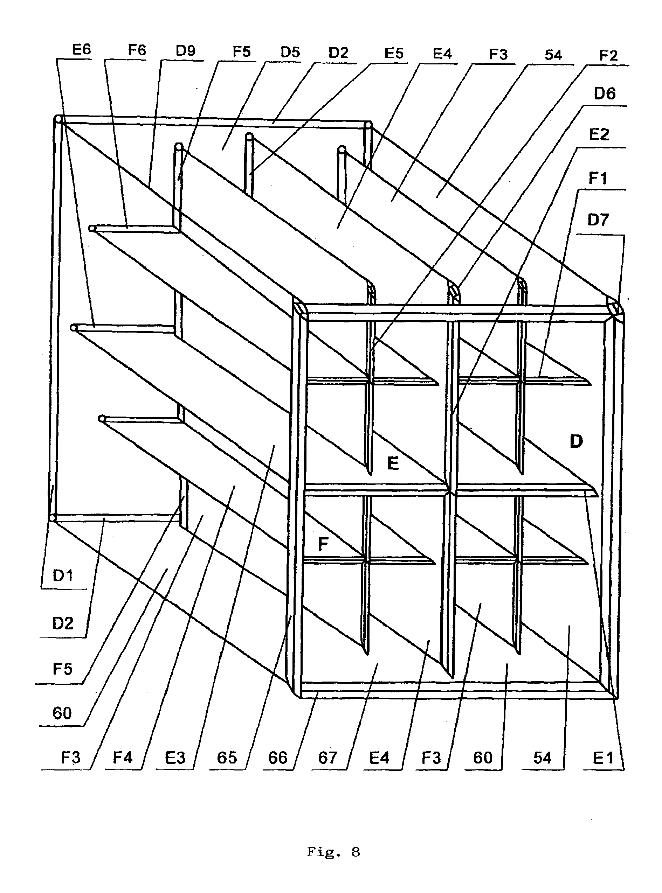

As shown in Figs. 7 and 8, the wind source compressing channel D are divided by the inlet 67 section of the air channel unit of the compressor A, and each unit divides the air channel C into 30 compressing channels D by 5 vertical partitions 54, four horizontal partitions 60 and D9. As shown in Fig. 7, the compressing channel D from the inlet 67 to the inner outlet D5 is an air channel having a shape of a hollow quadrangular prism, and the inlet 67 and the inner outlet D5 are each provided with wind source compressing sills 66, 65, D8. The compressing sill D8 of the inner outlet D5 uses a round tube as a horizontal sill D2 which intersects with a vertical sill D1 to connect the side panels 16a, 16b, the vertical partitions 52, the upper panel 21 and the lower panel D3 and so on of the compressor A. In Fig. 7, the side panels 16a, 16b and the vertical partitions 52 are delimited by a dissecting line D4, which interior will not be discussed herein. A H steel bar D7 is used to connect the overlapped vertical sills 63, 64 and the horizontal sills of each unit inside the compressing sills 66, 65 of the inlet 67, wherein the vertical sills 63, 64 and 65 is connected to the frame 11 at the bottom of the system, and the vertical sills include the compressing sill D1 of the inner outlet D5, the vertical sills E2, F2 of the compressing channels E, F subdivided in Fig. 8, and the vertical sills E5, F5 of the inner outlet D5, which are connected to the frame 11 at the bottom of the system. Various compressing sills of the inlet 67 are connected to the external edges with the H steel bar D7 inside which is enclosed by a curved roll formed of the plate D6, in such a way that various stages of the compressing sills are formed into an oval shape with two external edges pointed. As shown in Fig. 8, an extra large-sized system must have compressing channels continuously divided into at least 5 stages. The first-stage air channel C is divided into 30 second-stage compressed channels D, each compressed channel D is divided into 4 third-stage compressed channels E, each compressed channel E is divided into 4 fourth-stage compressed channels F, each compressed channel F is divided into 4 fifth-stage compressed channels G, which can be further divided by analogy. The compressed channel tapers from the inlet 67 to the inner outlet D5, with a tapered degree of 0.2° to 0.3°. As can be seen in Fig. 8, the vertical compressing sill E2 and the horizontal compressing sill E1 inside the inlet 67 of the compressed channel D withdraw towards the interior of the compressing channel and are then mounted in the vertical partitions 54 and the horizontal partitions 60, and the vertical and horizontal sills E5, E6 at the inner outlet D5 are also mounted in the vertical partitions 54 and the horizontal partitions 60. The compressing channel E is about 5% shorter than the compressing channel D. Similarly, the compressed channel F is about 5% shorter than the compressed channel E. The vertical partitions E4, F3 of the compressing channels E and F are also correspondingly shortened so as to be mounted in the pointed parts of the sills E1, E2, F1, F2, and the pointed parts include the vertical partitions 54, the horizontal partitions 60 and sills 65, 66 of the compressing channel D as well as the horizontal and vertical sills D2, D1, E6, E5, F6, F5 of round tube. As shown in Fig. 8, the compressing sills E1, E2 of the compressed channel E of the inlet 67 are reduced by 10% in comparison with the sills 65, 66 of the compressing channel D, and the sills F1, F2 of the compressing channel F are reduced by 10% in comparison with the sills E1, E2 of the compressing channel E, and the sills D1, D2, E5, E6, F5, F6 of the round tube of the inner outlet D5 are reduced by 3% in comparison with the compressing sills of the compressing channel at the same stage of the inlet 67. All the horizontal compressing sills, such as the air inlet surfaces 48, 50 and the inner outlet D5, extend thoroughly through the compressed channels to connect the left and right side panels 16a, 16b, the upper panel 21 of the connecting device of all the vertical compressing sills, the compressed channels of the compressors A5 to A1, and the frame 11 at the bottom of the connecting device, thereby forming a connected body. Due to the effect of the dual compressing sills in conjunction with the tapered compressed channels, no wind source can escape from the compressed channels no matter it is big or small. A self-compressed wind turbine B is formed, wherein the rotational force of the wind turbine B is equal to the wind collecting pressure on large areas of the air inlet surfaces 48, 50, thereby driving the wind turbine B in high-speed rotation.

As shown in fig.9, the compressed-air wind turbine generator system is centered about the wind turbine B, in combination with the compressor A and the vertical sails 8, 72, thus forming a square-shaped system which has a transverse width 8% greater than the longitudinal length thereof, the greatest distance 1 between the sails 8a, 8b placed opposite to each other at two sides of the system is about 5% more than the overall width W₁ of the air vertical surface 48, 50 of the compressor A, and the outer diameter line 85 of the wind turbine B is 32% of the overall width W₁ of the vertical surfaces 48, 50. The vertical partition 52 (including the side panels 16a, 16b) of each of the air channel units C1, C2, C3, C4, C5, C6, C7 of the compressor A is arcuately bent toward the unit C5, and tapers the air channels toward the gap 73 between the compressor and the wind turbine B. the vertical partition 52 (including the side panels 16a, 16b) is gradually widened outward to the air vertical planes 48, 50, the air channel units C1, C7 are placed along the derrick crossbeam 4, forming the vertical surface 48 parallel to the derrick crossbeam 4, the intermediate five air channel units C2, C3, C4, C5, C6 are disposed within the range of 0.9/4 of the perimeter of the externally tubular ground beam 1, forming a projecting cylindrical vertical surface 50. The tubular posts 49, 75, 76 are disposed with limitations, wherein the tubular post 49 is located adjacent the vertical partition 54, the tubular post 75 is disposed within the compressing portion 23, and whether to increase the number of other tubular posts 76 is dependent on the practical demand. The vertical sails 8a, 8b are symmetrically disposed at two side edges behind the compressor A, an additional sail 72 is disposed at a location deviation to right at the rear side edge, each of the sails 8a, 8b, 72 generally has 5∼6 curved and rolled blades 9 which are vertically arranged in a line of the same height as the system, wherein the curved and rolled blades of the opposite sails 8a, 8b have different specifications, an adjacent blade, as compared with a blade closest to the compressor A, is widened 7%, and it follows that the rest blades are in turn widened 7%. The blades of other additional sails 72 are transversely arranged along the rear side edge of the system, without being widened. The transverse and vertical derrick beams 69, 70, 71 and the derrick posts 15, 13 all can be designed based on the specification of the system, wherein the amounts, volumes and positions thereof are calculatingly determined by the specification of the system.

It is necessary to indicate that as the plurality of compressors are spaced apart from each other in an up-and-down direction and are overlapped with each other with intervals, it is practical to dispose a plurality of tubular posts at the intermediate vertical partition in each air channel and elevator passageways which are disposed through each compressor, and are connected to the bottom frame, including an external derrick post, such an arrangement is used for securement and maintenance of large-scaled systems of more than 10 MW.

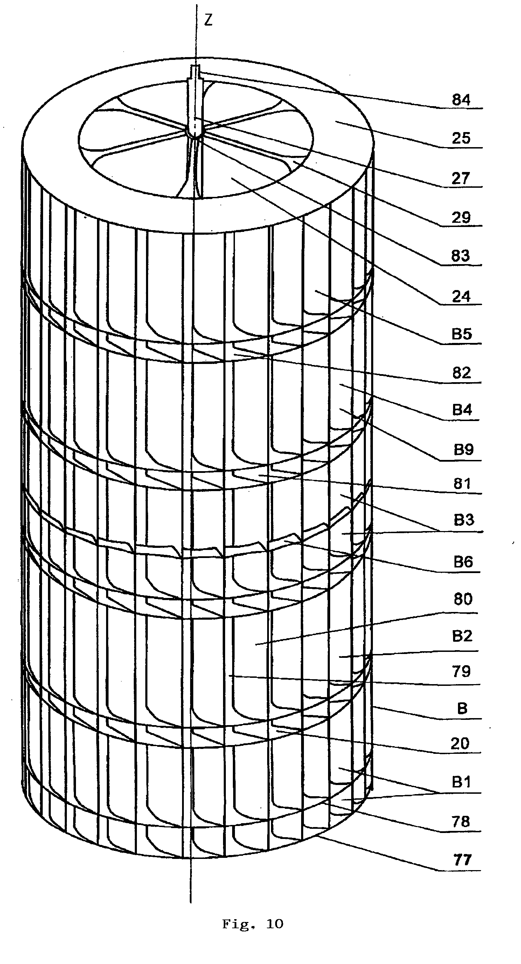

Detailed illustrations are provided as follows for the wind turbine of the present invention with reference to Figs.10, 11, 12.

The reference sign B9, shown as follows, indicates a wind turbine unit, and reference signs 20, 82 are used to indicate the same space.

The wind turbine B, of a cylindrical shape having an external cylindrical face 87 and an internal cylindrical face 89, comprises a top circular plate 25, a bottom circular plate 77, as well as five wind turbine units B1, B2, B3, B4, B5 and four radial air exhaust spaces 82 located between the top circular plate 25 and the bottom circular plate 77. The middle of the wind turbine B is a hollow cylindrical space. The central shaft 27 is connected to the circular plates of each unit B9, respectively, by a radially outwardly extending connecting beam 29, said circular plates including the top circular plate 25 and the bottom circular plate 77. The overall height of the cylindrical wind turbine B depends on the number of overlapped compressors A of the system.

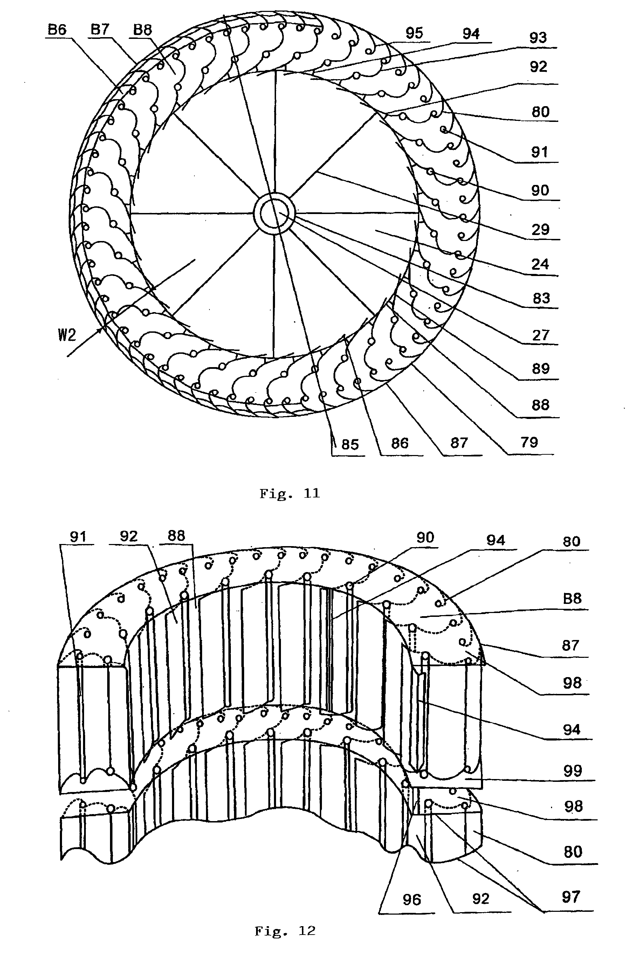

Each of the units B1, B2, B3, B4, B4 of the wind turbine B respectively includes two circular plates 98, 99 (i.e. a top one and a bottom one) and blade sets 80, 92, 93, as shown in fig. 11, in the plane B8 of the circular plate B7, are disposed the external blades 80, the intermediate blades 93, the internal blades 92 as well as the internally tubular posts 90 and the externally tubular posts 91, respectively. The external blades 80, the intermediate blades 93 and the internal blades 92 are connected to each other, forming two folds and three bends. Said external blades 80 are connected inward from the outer edge 87 of the circular plate B7 to a location of the externally tubular post 91, with a radial width of the external blades from the outer edge 87 to said location being 37% of a unilateral width w2 of the body plane B8 of each circular plate B7. The intermediate blades 93 are connected to the externally tubular post 91 and the internally tubular post 90, respectively, with a radial width of the intermediate blades 93 from the externally tubular post 91 to the internally tubular post 90 being 38% of the unilateral width W₂. The internal blades 92 are connected to the internally tubular post 90, and a radial width of the internal blades from the internally tubular post 90 to the inner edge 89 of the circular plate B7 being 25% of the unilateral width W₂, the internally tubular posts 90, in a total number of 32, are uniformly distributed along the entire plane B8 of the circular plate B7, and the number of externally tubular posts 91 is 64, said two kinds of circular posts 90, 91, which respectively extend from a double-joined circular plate 77 at the bottom plane of the wind turbine B through each unit B1, B2, B3, B4, B5, include circular plates B7 on each layer, additional circular plates 78 and interlayered air exhaust spaces 82, and a top circular plate 25 connected to the wind turbine B.

As shown in fig. 11, the plane B8 of the interlayered circular plates 98, 99 of the wind turbine B is divided into three portions, i.e. the inner portion, the intermediate portion, and the outer portion, which three portions exactly are mounting positions of the external blades 80, the intermediate plates 93 and the internal blades 92 of each of the units B1, B2, B3, B4, B5, e.g. the external blades extend from the outer edge 87 of the circular plate B7 to the externally tubular post 91, with the body line thereof extend inwardly to form an angle of 35 degree with respect to the diameter line 85, on the contrary, the intermediate blades 93 and the internal blades 92 extend outwardly to form an angle with respect to the diameter line 85, respectively, with the angle between the internal blades 92 and the diameter line being 70 degrees and the angle between the intermediate blades 93 and the diameter line being 50 degrees, the external blades 80 are in the form of a elliptical semi-body, with the depth of the curves thereof being 25% of the width thereof, the intermediate blades 93 are semi-arcuate, with the depth of the curves thereof being 43% of the width thereof, and the intermediate blades 92 are arcuate, with the depth of the curves thereof being 13% of the width thereof. The number of said internal, intermediate and external blades 92, 93, 80 which are connected to form two folds and three bends are divided into three portions each of which includes 32 blades based on 64 internally tubular and externally tubular posts 90, 91. In addition, the additional external blades 95 include 32 tubular posts 91. in the partition air inlet port 79 between the external blades 80 and the additional external blades 95, are further provided with a plurality layers of multi-annular wedge plates B6 for enhanced connection of the surrounding of the wind turbine B, and in the plane B8 of the interlayered annular plates 98, 99, each blade 92, 93, 80 forms a torch-shaped pattern of two folds and three bends. But in the interlayered air exhaust space 82 are disposed only 64 external wind exhaust blades 81 equal to the total number of the external blades 80 and the additional external blades 95. Inside the rest blades, are disposed only circular tubes 96, instead of blades, for connecting angle iron posts 94 in the unit B9, all the ends of the circular tubes 96 are connected to each other through each unit B9 and the partition space 20, connected to the bottom and top circular plates 77, 25, the respective number of said circular tubes 96 and the angle iron posts 94 is 32 equal to that of the internal blades 92. as shown in fig. 12, two side edges of the angle iron posts 94 are mounted on the back side of the internal blades 92, but the angle iron posts 94 have a square angle of 90 degrees which cannot extend beyond the inner edge 89 of the circular plate B7, and the angle iron posts 94 have a dimension which occupies 50%∼90% of the width of the air exhaust port 88 of the inner edge 89. from the layout of the internal, intermediate and external blades 92, 93, 80 in the plane B8 of the circular plate B7 as shown in fig. 11, it can be seen that each of the units B1, B2, B3, B4, B5 has a narrow air inlet port 79 and an internally wide air inlet space, which arrangement enables easy wind entry and expansion occurred in the interior wind sources, forming a wind force that can balance the overall suction force, as shown in figs.5 and 6, with respect to the inner edge 61 of the compressor A, half of the periphery plane of the outer edge 87 of the wind turbine B belongs to the space of the air inlet port 79 while the rest belongs to the air exhaust space, in addition to the interlayered radial air exhaust space 82 and the up-and-down radial air exhaust space 24, and 39% of the area of the outer edge 87 of the wind turbine B is the air inlet port 79 while 61% thereof is the combined air exhaust space.

At first, the diameter of the units B1, B2, B3, B4 and B5 will be explained. The diameter herein refers to the diameter of the outer cylindrical surface 87, and is sized to be 32% of the combined width of the air inlet surfaces 48, 50 of the compressor A. The circular ring plate B7 occupies 29.5% of the diameter, and the portion 86 of the inner blades 92 extending beyond the exhaust 88 of the inner edge 89 of the circular ring plate B7 occupies 1% of the diameter, the cylindrical body of the hollow space 24 occupies 69.5% of the diameter. The height of the unit B9 is 0.3% to 1% more than the total height of the outlet 57 of the compressor A, and the height of the exhaust space 20 is 0.3% to 1% less than the height of the spacing 18 of one upper compressor A and one lower compressor A. These sizes are of the inlet 79 of the units B1, B2, B3, B4, B5 of the wind turbine B with respect to the outlet 57 of the air outlet surface 61. As shown in Fig. 12 taken along the line 97, the exhaust space 20 has an upper circular ring panel 98 and a lower circular ring panel 99, and is inclined at an angle of 5° to 10° from inside to outside, and the unit B9 is inclined at an angle of 5° to 10° from outside to inside.

When used in a typical large-sized device, the units B1, B2, B3, B4 and B5 of the cylindrical wind turbine B must be provided with multiple layers of additional circular ring panel 78 because the spaced unit of each spaced inlet 79 has a height not more than two meters, and a width not more than 1.8meter. The additional circular ring panel 78 is used to reinforce the wind turbine B, while the unit B9 of the wind turbine B and the spaced exhaust space 82 are dependent on the number of the layers of the compressor A required according to the size of the device, and cannot be additionally increased. The connecting ends of the beams 29 welded to the inner cylindrical surface 89 of the circular ring panels 25, 77, 98, 99, B7 are gradually widened towards to the inner cylindrical surface 89, while the other ends thereof are fixed with the central shaft 27 via a flange 83. The lower end of the shaft 27 is connected with the planar bearing 58, and the upper end thereof is narrowed to be neck for mounting a bearing 28 in engagement with the flange 83 of the bearing housing 74, so as to connect the mounting frame 30 and the circular ring frame 26. However, the number of the beams can be determined as actually required.

The units of the wind turbine are all coupled to the central shaft by means of the beam bone. The upper end of the central shaft is fixed by the bearing, and the lower end thereof is connected with the sprocket connector by the planar bearing and then inputs the kinetic energy into the generator assembly by a push bearing. This is a rough process and can be easily constructed no matter how large the system is, which can simplify the construction and further save the cost.

Furthermore, the specifications and sizes of the device are calculated based on the width of the air surfaces of the compressor. However, the eccentric degree of the curves of the compressor are all calculated based on the center of the wind turbine with respect to the air surface of the compressor, and the air supply area of the movable space only occupies about 39% of the actual area of the external edge of the wind turbine, and the rest 61% thereof is the air exhaust area of the wind turbine.

The present device varies greatly in size, for instance, a small-sized device can generate 100W for streetlight illumination, and a large-sized device can generate 1 million KW, such that the large-sized device generates a power which is about thousands of times of the small-sized device. The increase of the capacity of the device can be achieved by division of the compressed channel at more levels and addition of blades, curved wedge plates, external cylindrical posts and outer blades. Such a design makes the device more compact and cost-effective.

## Claims

1. A compressed-air wind turbine generator system having a substantially square, movable body, said system including:
a wind turbine (B) positioned in a central portion of the system, the wind turbine having a central shaft (27) connected to input shafts of generator sets (7, 10) in order to drive the input shafts to rotate around a rotational central axis (z);
a plurality of compressors (A1, A2, A3, A4, A5) for providing compressed air to the wind turbine (B), the plurality of compressors being alignedly stacked at a front side of the system in the direction of the rotational central axis (z), the plurality of compressors extending from their outer ends to their inner ends towards the central portion of the system taperedly along a curve, the outer ends of the compressors jointly containing an air inlet surface with a first width (w₁), and the inner ends of the compressors jointly containing an air outlet surface which encloses a cylindrical space for concentrically accommodating the wind turbine (B);
a left sail (8a) and a right sail (8b) erecting at the left side and the right side of the system, respectively, symmetrically with respect to the center of the system, the left and right sails being arranged closer to the rear side of the system and extending from the front side to the rear side in such a manner that the distance between the left sail (8a) and the right sail (8b) gradually increases; and
a rear sail (72) erecting at the rear side of the system, the rear sail being arranged closer to the left sail (8a) or the right sail (8b), depending the back profile of the compressors;
wherein the plurality of compressors, the left and right sails and the rear sail are assembled into a unit in such a way that they can rotate together in the range of 360 degrees with respect to the wind turbine under the action of the sails to keep the air inlet surface of the compressors facing the largest wind.

2. The system according to claim 1, wherein the plurality of compressors (A1, A2, A3, A4, A5) contain five, and each of the compressors includes seven air channel units (C1, C2, C3, C4, C5, C6, C7) spaced apart from one another, the seven air channels units taperedly extending towards the central portion of the system from their outer ends to their inner ends, forming a substantially fan shape, and the air inlet surface containing a convex cylindrical surface (50) located at the middle portion of the air inlet surface and planar surfaces (48) located at the two side portions of the air inlet surface.

3. The system according to claim 2, wherein the across section of each of the air channel units (C1, C2, C3, C4, C5, C6, C7) is substantially quadrangular, and wherein the height of each of the air channel units along the rotational central axis (z) smoothly decreases from the outer end of this air channel unit to a position at a certain depth of the air channel unit and then smoothly increases from said position to the inner end of the air channel unit, so that a narrowing portion (23) is created at said position, whereby a respective compressor spacing (18) is formed between every two adjacent compressors of the plurality of compressors (A1, A2, A3, A4, A5).

4. The system according to claim 3, wherein the narrowing portion (23) is located at a position with a distance of two thirds of the total depth of the respective air channel unit away from the outer end of this air channel.

5. The system according to claim 2, wherein the seven air channel units (C1, C2, C3, C4, C5, C6, C7) are formed by means of an upper panel (21), a lower panel (D3), two side panels (16a, 16b) and six vertical partitions (52), and wherein each of the air channel units includes a shorter inlet section, a shorter outlet section and a longer middle section, the inlet section containing multi-stage compressing channels (D, E, F, G), and the outlet section containing at least one additional lateral partition (56) and at least one additional vertical partition (55) for dividing the outlet, both the vertical partition (52) and the additional vertical partition (55) having an angle in the range from 52° to 62° with respect to the diameter line (85) of the wind turbine across the center of the air inlet surface at the inner end of the compressor.

6. The system according to claim 5, wherein said multi-stage compressing channels include five stage compressing channels, the first stage compressing channel (C) being subdivided into thirty second stage compressing channels (D), each of the second stage compressing channels (D) being subdivided into four third stage compressing channels (E), each of the third stage compressing channels (E) being subdivided into four fourth stage compressing channels (F), and each of the fourth stage compressing channels (F) being subdivided into four fifth stage compressing channels (G).

7. The system according to claim 5, wherein said multi-stage compressing channels can include compressing channels with the stages from 2 to 11.

8. The system according to claim 5, wherein the inlet (67) and the inner outlet (D5) of any stage compressing channel have four edges equipped with compressing sills (68, 63, 65, 66, E1, E2, F1, F2, D1, D2, E5, E6, F5, F6) connected to one another to form a frame.

9. The system according to claim 8, wherein each compressing sill of the inlet (67) includes a H steel bar (D7) and a curved plate rolling (D6) enclosing the H steel bar (D7).

10. The system according to claim 8, wherein the compressing sills of the inner outlet (D5) consist of round pipes.

11. The system according to claim 8, wherein the compressing sills of the inlet (67) and the inner outlet (D5) of the first stage compressing channel extend to connect to the upper panel (21), the lower panel (D3) and two side panels (16a, 16b), respectively.

12. The system according to claim 5, wherein both of side vertical partitions (52) of the fifth air channel unit (C5) gradually close up to the center of the fifth air channel unit along the direction of the curve from the outer end to the inner end of the fifth air channel unit, wherein the right side panel (16b) and the vertical partitions of the first, second, third and fourth air channel units (C1, C2, C3, C4) are bent towards the fifth air channel unit (C5) from their respective outer ends to their respective inner ends, and wherein the left panel (16a) and the vertical partitions of the sixth and seventh air channel units (C6, C7) are bent towards the fifth air channel unit (C5) from their respective outer ends to their respective positions at their respective depths of three fourths, and are then bent from the positions at their respective depths of three fourths to their respective inner ends and deflected from the fifth air channel unit (C5).

13. The system according to claim 1, wherein the wind turbine (B) is cylindrical with an outer cylindrical surface (87) and an inner cylindrical surface (89), and wherein the wind turbine (B) includes a top circular ring panel (25), a bottom circular ring panel (77) and a plurality of wind turbine units (B1, B2, B3, B4, B5) located between the top circular ring panel (25) and the bottom circular ring panel (77), and wherein the central shaft (27) is connected to the circular ring panels of each of the wind turbine units (B9) by connecting beams (29) extending radially outwards, respectively, said circular ring panels including the top circular ring panel (25) and the bottom circular ring panel (77), and wherein the wind turbine (B) may also selectively include at least one radial exhaust space (20, 82), each of which radial exhaust space (20, 82) is positioned between the adjacent wind turbine units.

14. The system according to claim 13, wherein each of the wind turbine units is provided with a plurality of blades uniformly spaced apart from one another around circumference thereof, wherein each blade extends along the rotational central axis (z) and the blades are fixed together by means of the upper circular ring panel (98) and the lower circular ring panel (99) located between the outer cylindrical surface (87) and the inner cylindrical surface (89), and wherein the central shaft (27) is connected to the upper circular ring panel (98) and the lower circular ring panel (99) by means of the connecting beams (29) extending radially outwards, respectively.

15. The system according to claim 14, wherein the outer cylindrical surface (87) has an outer diameter being about 32% of the first width (W₁), wherein the inner cylindrical surface (89) has an inner diameter being at least 60% of the outer diameter, and wherein the radial width (W₂) of circular ring panel of the upper and lower circular ring panels (98, 99) is at least 20% of the outer diameter.

16. The system according to claim 14, wherein each blade is divided into an outer blade (80), a middle blade (93) and an inner blade (92), and wherein the outer blade (80), the middle blade (93) and the inner blade (92) are connected to one another by means of connecting posts (90, 91), respectively, to form two folds and three bends, and extend from the outer cylindrical surface (87) to the inner cylindrical surface (89) at different angles, respectively, and wherein the inner blade (92) extends inwards past the inner cylindrical surface (89).

17. The system according to claim 16, wherein the outer blade (80) has a radial width being at least 27% of the radial width (W₂) of circular ring panel, wherein the middle blade (93) has a radial width being at least 30% of the radial width (W₂) of circular ring panel, wherein the inner blade (92) has a radial width being at least 20% of the radial width (W₂) of circular ring panel, and wherein the portion (86) of the inner blade (92) past the inner cylindrical surface (89) has a radial width being at least more than 0.5% of the radial width (W₂) of circular ring panel.

18. The system according to claim 16, wherein the inner blade (92) extends outwards to form an angle of at least 50° with respect to the diameter line (85) of the wind turbine across the center of the air inlet surface, wherein the middle blade (93) extends outwards to form an angle of at least 42° with respect to the diameter line (85) of the wind turbine across the center of the air inlet surface, and wherein the outer blade (80) extends inwards to form an angle of at least 29° with respect to the diameter line (85) of the wind turbine across the center of the air inlet surface.

19. The system according to claim 16, wherein each inner blade (92) is also equipped with an angle iron post (94) adjacent to the inner cylindrical surface (89), the angle iron post (94) being arranged along the back surface of the inner blade (92) so that an exhaust (88) formed between the adjacent inner blades (92) has a width at least 50% of which is occupied by the angle iron post (94).

20. The system according to claim 16, wherein each pair of adjacent blades (80) is provided with an additional outer blade (95) therebetween, wherein a lateral curved wedge plate (B6) is provided in a spaced inlet (79) located between the adjacent outer blade (80) and additional outer blade (95) to connect the adjacent outer blade (80) and additional outer blade (95), and wherein the additional outer blade (95) is assembled between the upper and lower circular ring panels (98, 99) and on the connecting posts (91).

21. The system according to claim 16, wherein the bending depth of the inner blade (92) is at least 18% of the radial width thereof, wherein the bending depth of the middle blade (93) is at least 21% of the radial width thereof, wherein the bending depth of the outer blade (80) is at least 8% of the radial width thereof, and wherein the additional outer blade (95) has the same bending depth as the outer blade (80).

22. The system according to claim 14, wherein there are also at least more than one additional circular ring panel (78) provided between the upper and lower circular ring panels (98, 99) of each wind turbine unit, which additional circular ring panels (78) keep substantially flat and straight.

23. The system according to claim 16, wherein the number of the blades (9) of one wind turbine unit (B9) is from 128 to 1800, while the number of the connecting posts (90, 91) and the angle iron posts (94) increases as the number of the blades (9) increases.

24. The system according to claim 16, wherein a number of the respective curved wedge plates (B6) laterally spaced apart between the outer blade (80) and the additional outer blade (95) of the wind turbine unit (B9) is from 1 to 180.

25. The system according to claim 13, wherein the air outlet surface of each compressor (A) has an area being from 48% to 65% of the area of the outer cylindrical surface (87) of the respective wind turbine unit (B9).

26. The system according to claim 13, wherein the wind turbine units (B9) have the same number as the compressors (A), and wherein both the wind turbine units and the compressors include at least 8 wind turbine units and at least 8 compressors to generate electricity.

27. The system according to claim 5, wherein the air channel units (B9) spaced apart within each compressor (A) have a number from at least 5 to 30 to generate electricity.

28. The system according to claim 1, wherein a distance (1) between the outermost ends of the left and right sails at the rear side of the system is at least 101% of the first width (w₁).

29. The system according to claim 28, wherein each sail includes a plurality of curved and rolled blades arranged in one row and connected with one another, and wherein the plurality of curved and rolled blades have a combined width being at least 35% of the first width (w₁).

30. The system according to claim 29, wherein the plurality of curved and rolled blades of the left and right sails enlarge stepwise from the front side to the rear side of the system.

31. The system according to claim 29, wherein the plurality of curved and rolled blades of the rear sail have the same specifications.

32. The system according to claim 1, wherein the overall height of the stacked compressors (A) is substantially identical to the height of the sails and the wind turbine (B).

33. The system according to claim 1, wherein the sails and the plurality of compressors (A) are secured on a square frame (11) and beams (14, 53) of a circular ring derrick, and wherein the square frame (11) and the beams (14, 53) of the circular ring derrick are mounted on a circular ring rail (3) and a smooth ground beam (43) by means of pulleys (2, 47).
